# EUROPÄISCHE PATENTSCHRIFT

(11) **EP 3 387 056 B1**
(45) Veröffentlichungstag und Bekanntmachung des Hinweises auf die Patenterteilung: **04.05.2022**
(21) Anmeldenummer: 16808662.7
(22) Anmeldetag: 08.12.2016
(51) Int. Cl.: C08K 5/1515, C08L 69/00

(54) **POLYGLYCIDYLETHER-HALTIGE POLYCARBONATZUSAMMENSETZUNGEN**
POLYCARBONATE COMPOSITIONS CONTAINING POLYGLYCIDYL ETHER
COMPOSITIONS DE POLYCARBONATE CONTENANT DE L'ETHER POLYGLYCIDYLIQUE

(30) Priorität: 11.12.2015 EP 15199615
(43) Veröffentlichungstag der Anmeldung: 17.10.2018
(73) Patentinhaber: Covestro Intellectual Property GmbH & Co. KG, 51373 Leverkusen (DE)
(72) Erfinder: WEHRMANN, Rolf, 47800 Krefeld (DE); HEUER, Helmut, Werner, 57074 Siegen (DE); BOUMANS, Anke, 47574 Goch (DE)
(74) Vertreter: Levpat
(86) Internationale Anmeldenummer: PCT/EP2016/080287
(87) Internationale Veröffentlichungsnummer: WO 2017/097915

(56) Entgegenhaltungen:
- EP-A2- 0 718 367
- EP-A2- 0 812 884
- US-A- 3 945 967
- US-A- 4 722 955
- US-A- 5 859 073

## Beschreibung

Die vorliegende Erfindung betrifft Polycarbonatzusammensetzungen, enthaltend spezifische Glycidyletherverbindungen sowie üblicherweise mindestens ein Additiv aus der Gruppe der Thermostabilisatoren, UV-Stabilisatoren und/oder Entformungsmittel, sowie Formteile, hergestellt aus diesen Zusammensetzungen. Die Polycarbonatzusammensetzungen weisen eine hohe Fließfähigkeit und gute thermische Eigenschaften auf. Die Erfindung betrifft außerdem die Verbesserung der Fließfähigkeit von Polycarbonat-Schmelzen.

Die Fließfähigkeit von (Co)-Polycarbonatzusammensetzungen bzw. (Co)-Polycarbonat-Blends kann durch die Zugabe von niedermolekularen Verbindungen erhöht werden. Da derartige Substanzen aber gleichzeitig als Weichmacher (plasticizer) wirken, senken sie die Wärmeformbeständigkeit und die Glastemperatur der Polymermatrix. Dies wiederum ist nicht erwünscht, da dadurch der Temperatureinsatzbereich der Materialien reduziert wird.

DE 102004020673 A1 beschreibt Copolycarbonate mit verbesserter Fließfähigkeit basierend auf Bisphenolen mit einer Ether- bzw. Thioetherverknüpfung.

DE 3918406 A1 offenbart Blends für optische Datenspeicher auf Basis eines speziellen Polycarbonates mit Elastomeren oder anderen Thermoplasten sowie deren Verwendung bei optischen Anwendungen, speziell optischen Datenspeichern wie Compact Disks.

EP 0 953 605 A2 beschreibt lineare Polycarbonatzusammensetzungen mit verbessertem Fließverhalten, dadurch gekennzeichnet, dass cyclische Oligocarbonate in großen Mengen, z. B. 0,5 % bis 4 %, zugesetzt werden und mittels eines Doppelwellenextruders in der Matrix eines linearen BPA-Polycarbonates bei 285 °C homogenisiert werden. Dabei nimmt die Fließfähigkeit mit steigender Menge an cyclischen Oligocarbonaten zu. Gleichzeitig nimmt aber die Glastemperatur und damit die Wärmeformbeständigkeit deutlich ab. Dies ist bei den technischen Anwendungen von höher wärmeformbeständigen (Co-)Polycarbonatzusammensetzungen unerwünscht. Dieser Nachteil muss dann durch den Einsatz höherer Mengen an teuren Co-Bisphenolen ausgeglichen werden.

US 3,945,967 A betrifft Polycarbonat-Zusammensetzungen, die durch eine Additiv-Kombination aus einer Epoxyverbindung, hergestellt aus einem Epichlorhydrin, und das Reaktionsprodukt aus einem Alkylphosphit und einer Chlor-enthaltenden Verunreinigung aus der Epoxyverbindung stabilisiert sind. Es werden aber keine Polyglycidylether-Verbindungen, wie sie vorliegend eingesetzt werden, beschrieben.

US 4,722,955 A beschreibt Polycarbonat-basierte Zusammensetzungen mit speziellen Additiven als thermischen Stabilisatoren, umfassend eine Phosphorverbindung und eine Epoxyverbindung mit einer internen acyclischen Ether-Verbindung, Diglycidyletherverbindungen sind als bevorzugt genannt. Es werden aber keine Polyglycidylether-Verbindungen, wie sie vorliegend eingesetzt werden, beschrieben.

EP 0 812 884 A2 beschreibt eine thermoplastische Zusammensetzung auf Basis eines Polycarbonates, enthaltend ein Trennmittel. Ziel ist die Verbesserung der Entformbarkeit. Das Trennmittel ist ein Triglycidylether auf der Basis von Glycerin oder Trimethylolpropan. Die MFR beispielhafter Zusammensetzungen nimmt mit zunehmender Menge des Trennmittels in der Zusammensetzung ab.

EP 0 718 367 A2 beschreibt Polycarbonat-basierte Zusammensetzungen, enthaltend polymere Epoxyharze, welche als die Schmelze stabilisierend beschrieben sind. Es werden keine Polyglycidylether-Verbindungen, wie sie vorliegend eingesetzt werden, beschrieben.

US 5,859,073 A beschäftigt sich mit der Verbesserung der Verarbeitungsstabilität von PC/Polyester-Zusammensetzungen und einer Erhöhung des Molekulargewichtes des Polymers. Es werden Metalloxid, Phosphit und sterisch gehindertes Phenol oder Metalloxid und difunktionales Epoxyharz zu diesem Zweck zugesetzt. In den Beispielen wird Araldit GT 6071 eingesetzt, Diglycidylether von Bisphenol A. Es werden aber keine Polyglycidylether-Verbindungen, wie sie vorliegend eingesetzt werden, beschrieben.

Aufgabe der vorliegenden Erfindung war es somit, Polycarbonatzusammensetzungen mit einer hohen Fließfähigkeit und möglichst unveränderten thermischen und mechanischen Eigenschaften (z. B. Glastemperatur) bereitzustellen, welche die Nachteile der aus dem Stand der Technik bekannten Zusammensetzungen, wie z. B. unzureichendes Fließverhalten bei der Verarbeitung, nicht aufweisen. Gleichzeitig sollten die erfindungsgemäßen Polycarbonatzusammensetzungen über gute Schmelzestabilitäten verfügen, was für die Herstellung von Extrusions- oder Spritzgussteilen in einem Produktionsprozess wichtig ist.

Überraschenderweise wurde nun gefunden, dass diese Aufgabe durch eine Zusammensetzung, enthaltend
A) 64,0 Gew.-% bis 99,94 Gew.-% aromatisches Polycarbonat und
B) 0,05 bis 3,0 Gew.-% mindestens einer Polyglycidyletherverbindung der Formel (1) 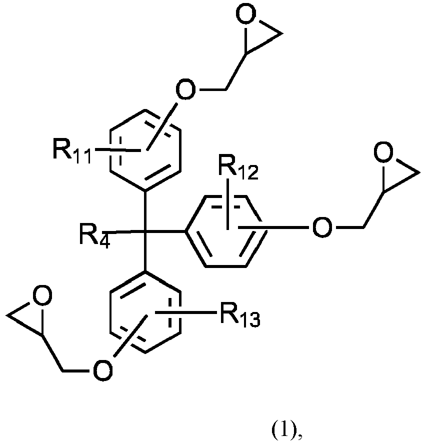 in der R₄ für eine C₁- bis C₈-Alkyl- oder für eine Arylgruppe steht, wobei die Alkylgruppe verzweigt oder unverzweigt ist, und
   R₁₁ bis R₁₃ gleich oder verschieden sind und für H, C₁- bis C₈-Alkyl- oder Arylreste stehen, wobei die Alkylreste verzweigt oder unverzweigt sind,
gelöst wird.

Die Aufgabe wird weiterhin gelöst durch Formteile, hergestellt aus einer solchen Zusammensetzung.

Die erfindungsgemäßen Zusammensetzungen zeichnen sich durch gute mechanische Eigenschaften aus, insbesondere eine gute Schlagzähigkeit, bestimmt nach ISO 180/1C:2000-12, und sehr gutes rheologisches Verhalten, d.h. eine hohe Fließfähigkeit, ausgedrückt durch die Schmelzevolumenfließrate MVR, bestimmt nach ISO 1133-1:2011-12. Gleichzeitig ist eine hohe Schmelzestabilität gegeben.

Vorzugsweise weisen die erfindungsgemäßen Zusammensetzungen ferner 0,001 Gew.-% bis 3 Gew.% mindestens eines Additivs aus der Gruppe der Thermostabilisatoren, UV-Stabilisatoren und/oder Entformungsmittel auf (Komponente C).

Die erfindungsgemäßen Zusammensetzungen können ferner bis zu 30,0 Gew.-%, bevorzugt 0,10 bis 25 Gew.-%, besonders bevorzugt 0,2 bis 20 Gew.-% sonstige übliche Additive ("weitere Additive", Komponente D) enthalten. Diese weiteren Additive gehören nicht den Gruppen der Thermostabilisatoren, UV-Stabilisatoren und Entformungsmittel an. Beispiele für Komponente D sind Flammschutzmittel, IR-Absorber, Antistatika und anorganische Füllstoffe wie Glasfasern, Carbonfasern, Titandioxid, Silicate, Bariumsulfat und Talk.

Ganz besonders bevorzugte Zusammensetzungen enthalten neben den Komponenten A) bis D) keine weiteren Komponenten.

Die einzelnen Bestandteile der erfindungsgemäßen Zusammensetzungen sind im Folgenden noch näher erläutert:

### Definitionen

Unter C₁- bis C₈-Alkyl, verzweigt oder unverzweigt, ist im Rahmen der Erfindung eine Alkylgruppe mit 1 bis 8 Kohlenstoffatomen zu verstehen. C₁- bis C₄-Alkyl steht beispielsweise für Methyl, Ethyl, n-Propyl, iso-Propyl, n-Butyl, sec.-Butyl, tert.-Butyl, C₁- bis C₆-Alkyl darüber hinaus beispielsweise für n-Pentyl, 1-Methylbutyl, 2-Methylbutyl, 3-Methylbutyl, neo-Pentyl, 1-Ethylpropyl, n-Hexyl, 1,1-Dimethylpropyl, 1,2-Dimethylpropyl, 1,3-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-3-methylpropyl, C₁- bis C₈-Alkyl darüber hinaus beispielsweise für n-Heptyl oder n-Octyl. Gleiches gilt für den entsprechenden Alkylrest in Aralkylresten.

Aryl steht für einen carbocyclischen aromatischen Rest mit 6 bis 34 Gerüstkohlenstoffatomen. Bevorzugte Beispiele für C₆- bis C₃₄-Aryl sind Phenyl, o-, p-, m-Tolyl, Naphthyl, Phenanthrenyl, Anthracenyl oder Fluorenyl. Arylen steht für ein zweifach gebundenes Aryl nach der vorstehenden Definition. Gleiches gilt für den aromatischen Teil eines Arylalkylrestes, auch Aralkylrest genannt.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

Im Rahmen der vorliegenden Erfindung beziehen sich die angegebenen Gew.-% der Komponenten A und B und der optional vorhandenen Komponenten C und D - soweit nicht explizit anders angegeben - jeweils auf das Gesamtgewicht der Zusammensetzung. Die Zusammensetzung kann neben den Komponenten A und B und den optional vorhandenen Komponenten C und D weitere Komponenten enthalten. In einer bevorzugten Ausführungsform besteht die Zusammensetzung aus den Komponenten A, B, C und D; d.h., die Komponenten A, B, C und D ergänzen sich zu 100 Gew.%.

### Komponente A

Polycarbonate im Sinne der vorliegenden Erfindung sind sowohl Homopolycarbonate als auch Copolycarbonate. Die Polycarbonate können in bekannter Weise linear oder verzweigt sein. Erfindungsgemäß können auch Mischungen von Polycarbonaten verwendet werden.

Die Polycarbonate haben mittlere Molekulargewichte M_{w} (ermittelt durch Messung der relativen Viskosität bei 25°C in CH₂Cl₂ und einer Konzentration von 0,5 g pro 100 ml CH₂Cl₂) von vorzugsweise 15.000 g/mol bis 36.000 g/mol, besonders bevorzugt von 16.000 g/mol bis 35.000 g/mol, insbesondere von 17.000 g/mol bis 34.000 g/mol, ermittelt mit Bisphenol A-Polycarbonatkalibrierung.

Die Herstellung der Polycarbonate erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis(3-methyl-4-hydroxyphenyl)propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 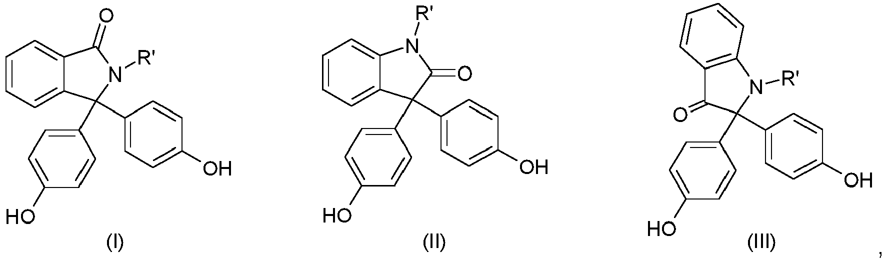 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und 2,2-Bis(3-methyl-4-hydroxyphenyl)propan sowie die Dihydroxyarylverbindungen der Formeln (I), (II) und (III).

Diese und weitere geeignete Dihydroxyarylverbindungen sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2 063 050, DE-A 2 036 052, DE-A 2 211 956 und DE-A 3 832 396, in FR-A 1 561 518, in der Monographie H. Schnell, "Chemistry and Physics of Polycarbonates", Interscience Publishers, New York 1964" beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxarylverbindungen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I) bis (III) 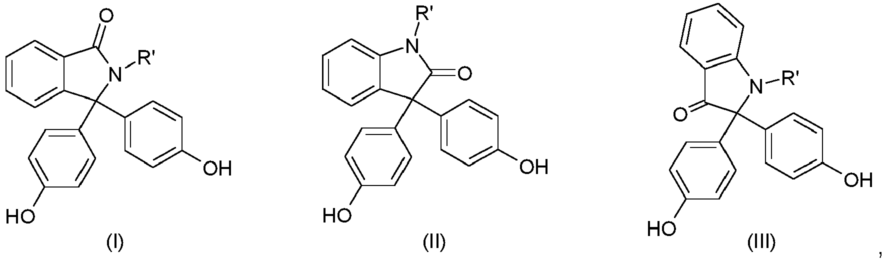 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, vorzugsweise mit Bisphenol A als Comonomer.

Zur Einarbeitung von Additiven wird die Komponente A bevorzugt in Form von Pulvern, Granulaten oder aus Gemischen aus Pulvern und Granulaten eingesetzt.

Erfindungsgemäße Zusammensetzungen enthalten 64,0 bis 99,94 Gew.-%, bevorzugt 70,0 bis 99,94 Gew.-%, besonders bevorzugt 80,0 bis 99,90 Gew.-%, ganz besonders bevorzugt bis 79,949 Gew.% mindestens eines aromatischen Polycarbonats.

### Komponente B

Die Polyglycidyletherverbindungen der Komponente B sind solche der allgemeinen Formel (1) 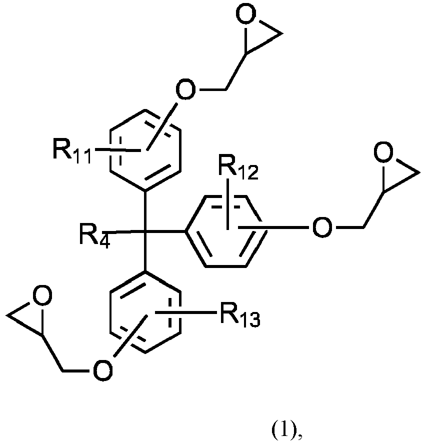 in der R₄ für eine C₁- bis Cs-Alkyl- oder für eine Arylgruppe steht, wobei die Alkylgruppe verzweigt oder unverzweigt ist, und

R₁₁ bis R₁₃ gleich oder verschieden sind und für H, C₁- bis Cs-Alkyl- oder Arylreste stehen, wobei die Alkylreste verzweigt oder unverzweigt sind.

Ganz besonders bevorzugt ist als Polyglycidylether, alleine oder im Gemisch mit anderen Polyglycidylethern der Formel (1), in erfindungsgemäßen Zusammensetzungen ein Polyglycidylether der Formel (2) (THPE-Trisglycidylether, Trisglycidylether von 1,1,1-Tris-(p-hydroxyphenyl)ethan) enthalten:

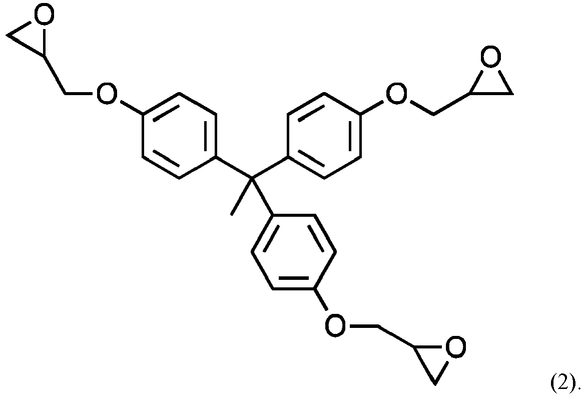

Erfindungsgemäße Zusammensetzungen enthalten 0,05 bis 3,0 Gew.-%, bevorzugt 0,1 bis 2,0 Gew.%, besonders bevorzugt 0,2 bis 1,5 Gew.-% und ganz besonders bevorzugt 0,3 bis 0,8 Gew.% mindestens einer Polyglycidyletherverbindung der Formel (1).

### Komponente C

Vorzugsweise enthalten die erfindungsgemäßen Zusammensetzungen ferner mindestens eines der Additive Thermostabilisator, UV-Stabilisator und/oder Entformungsmittel in einer Gesamtmenge von 0,001 Gew.-% bis 3 Gew.-%.

Als Thermostabilisatoren eignen sich bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36). Diese oder andere Thermostabilisatoren werden allein oder im Gemisch (z. B. Irganox^{®} B900 (Gemisch aus Irgafos^{®} 168 und Irganox^{®} 1076 im Verhältnis 1:3) oder Doverphos^{®} S-92228 mit Irganox^{®} B900 bzw. Irganox^{®} 1076) eingesetzt. Die Thermostabilisatoren werden alleine oder im Gemisch bevorzugt in Mengen von 0,003 bis 0,2 Gew.-% eingesetzt.

Als UV-Absorber werden solche Verbindungen eingesetzt, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF, Ludwigshafen), 2-(2'-Hydroxy-5'-(tert.-octyl)-phenyl)-benzotriazol (Tinuvin^{®} 329, BASF, Ludwigshafen), Bis-(3-(2H-benztriazolyl)-2-hydroxy-5-tert.-octyl)methan (Tinuvin^{®} 360, BASF, Ludwigshafen), 2-(4,6-Diphenyl-1,3,5-triazin-2-yl)-5-(hexyloxy)-phenol (Tinuvin^{®} 1577, BASF, Ludwigshafen), sowie Benzophenone wie 2,4-Dihydroxybenzophenon (Chimassorb^{®} 22 , BASF, Ludwigshafen) und 2-Hydroxy-4-(octyloxy)-benzophenon (Chimassorb^{®} 81, BASF, Ludwigshafen), 2,2-Bis[[(2-cyano-1-oxo-3,3-diphenyl-2-propenyl)oxy]-methyl]-1,3-propandiylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazine (Tinuvin^{®} 1600, BASF, Ludwigshafen), Tetraethyl-2,2'-(1,4-phenylen-dimethyliden)-bismalonat (Hostavin^{®} B-Cap, Clariant AG) oder N-(2-Ethoxyphenyl)-N'-(2-ethylphenyl)-ethandiamid (Tinuvin^{®} 312, BASF, Ludwigshafen).

Besonders bevorzugte UV-Stabilisatoren sind Bis-(3-(2H-benztriazolyl)-2-hydroxy-5-tert.-octyl)methan (Tinuvin^{®} 360), 2-(2'-Hydroxy-5'-(tert.-octyl)-phenyl)-benzotriazol (Tinuvin^{®} 329) und N-(2-Ethoxyphenyl)-N'-(2-ethylphenyl)-ethandiamid (Tinuvin^{®} 312), ganz besonders bevorzugt sind Bis-(3-(2H-benztriazolyl)-2-hydroxy-5-tert.-octyl)methan (Tinuvin^{®} 360), 2-(2'-Hydroxy-5'-(tert.-octyl)-phenyl)-benzotriazol (Tinuvin^{®} 329).

Es können auch Mischungen dieser Ultraviolett-Absorber eingesetzt werden.

Sofern die erfindungsgemäßen Zusammensetzungen UV-Absorber enthalten, beträgt die Menge an UV-Absorber bevorzugt höchstens 0,8 Gew.-%, besonders bevorzugt 0,05 Gew.-% bis 0,5 Gew.-%, ganz besonders bevorzugt 0,1 Gew.-% bis 0,4 Gew.-%, bezogen auf die Gesamtzusammensetzung.

Die den erfindungsgemäßen Zusammensetzungen gegebenenfalls zugesetzten Entformungsmittel sind bevorzugt ausgewählt aus der Gruppe, bestehend aus Pentaerythrittetrastearat, Glycerinmonostearat und langkettigen Fettsäureestern, wie beispielsweise Stearylstearat und Propandiolstearat, sowie deren Mischungen. Die Entformungsmittel werden vorzugsweise eingesetzt in Mengen von 0,05 Gew.-% bis 2,00 Gew.-%, bevorzugt in Mengen von 0,1 Gew.-% bis 1,0 Gew.%, besonders bevorzugt in Mengen von 0,15 Gew.-% bis 0,60 Gew.-% und ganz besonders bevorzugt in Mengen von 0,20 Gew.-% bis 0,50 Gew.-%, bezogen auf die Gesamtzusammensetzung.

Besonders bevorzugt ist mindestens ein Thermostabilisator und gegebenenfalls ein Entformungsmittel als Komponente C enthalten.

Bevorzugte Zusammensetzungen enthalten keine weiteren Komponenten als die Komponenten A bis C.

### Komponente D

Alternativ sind optional bis zu 30,0 Gew.-%, bevorzugt 0,10 bis 25 Gew.-%, besonders bevorzugt 0,2 bis 20 Gew.-% sonstige übliche Additive ("weitere Additive", Komponente D) enthalten. Diese weiteren Additive gehören nicht den Gruppen der Thermostabilisatoren, UV-Stabilisatoren und Entformungsmittel an. In dieser Ausführungsform bestehen die erfindungsgemäßen Zusammensetzungen bevorzugt aus den Komponenten A, B, C und D. Beispiele für Komponente D sind Flammschutzmittel, IR-Absorber, Antistatika, Umesterungsstabilisatoren wie Trisisooctylphosphat und anorganische Füllstoffe wie Glasfasern, Carbonfasern, Titandioxid, Silicate, Bariumsulfat und Talk.

Solche Additive, wie sie üblicherweise bei Polycarbonaten zugesetzt werden, sind insbesondere die in EP-A 0 839 623, WO-A 96/15102, EP-A 0 500 496 oder "Plastics Additives Handbook", Hans Zweifel, 5th Edition 2000, Hanser Verlag, München beschriebenen Antioxidantien, IR-Absorber, Antistatika, Flammschutzmittel, Antidrippingmittel, optischen Aufheller, Lichtstreumittel, Farbmittel wie Pigmente, auch anorganischen Pigmente, Ruß und/oder Farbstoffe, anorganischen Füllstoffe wie Titandioxid oder Bariumsulfat in den für Polycarbonat üblichen Mengen. Diese Additive können einzeln oder auch im Gemisch zugesetzt werden.

Die Herstellung der erfindungsgemäßen Polymer-Zusammensetzungen, enthaltend die Komponenten A bis C und gegebenenfalls D, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis C und gegebenenfalls D verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis C und gegebenenfalls D der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis C und gegebenenfalls D, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die Herstellung der Kunststoffformteile erfolgt vorzugsweise durch Spritzguss.

Erfindungsgemäße Zusammensetzungen sind zur Herstellung von Mehrschichtsystemen geeignet. Hierbei wird die erfindungsgemäße Polycarbonatzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Erfindungsgemäße Zusammensetzungen sind zur Herstellung von Rahmenbauteilen im EE (Elektro/Elektronik)- und IT-Bereich geeignet, insbesondere für Anwendungen, die hohe Anforderungen an den Flammschutz stellen. Solche Anwendungen sind beispielsweise Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch von Navigationsgeräten, Smartwatches oder Herzfrequenzmessern, sowie für Elektroanwendungen in Dünnwand-Ausfertigungen, z. B. Hausund Industrie-Vernetzungseinheiten und Smart Meter Gehäusebauteile.

Besonders geeignet sind erfindungsgemäße Zusammensetzungen zur Herstellung von dünnwandigen Formteilen der Dicke 0,1 bis 3 mm, bevorzugt 0,1 bis 2 mm, besonders bevorzugt 0,1 bis 1,0 mm für den Bereich Elektrik/Elektronik oder den IT-Bereich mit einer Brennbarkeitsklasse UL-94 V-0 bei 1,5 mm Wandstärke. Die Dickenangaben bedeuten in diesem Fall nicht, dass das Formteil an jeder Stelle eine solche Dicke, die im genannten Bereich liegt, aufweist. Vielmehr beziehen sich die angegebenen Dicken auf die Stelle des Formteils mit der geringsten Wandstärke.

Ein weiterer Gegenstand der Erfindung ist die Verwendung von mindestens einer Polyglycidyletherverbindung der Formel (1) (Komponente B) 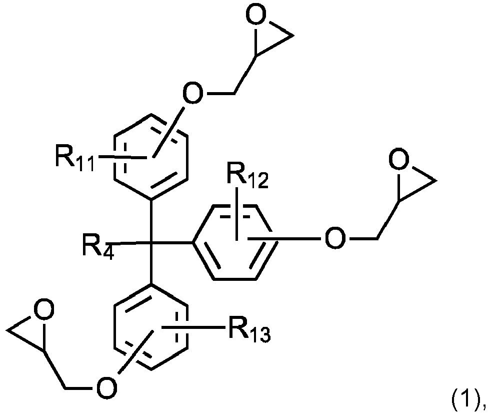 in der R₄ für eine C₁- bis Cs-Alkyl- oder für eine Arylgruppe steht, wobei die Alkylgruppe verzweigt oder unverzweigt ist, und
R₁₁ bis R₁₃ gleich oder verschieden sind und für H, C₁- bis Cs-Alkyl- oder Arylreste stehen, wobei die Alkylreste verzweigt oder unverzweigt sind,
bevorzugt von 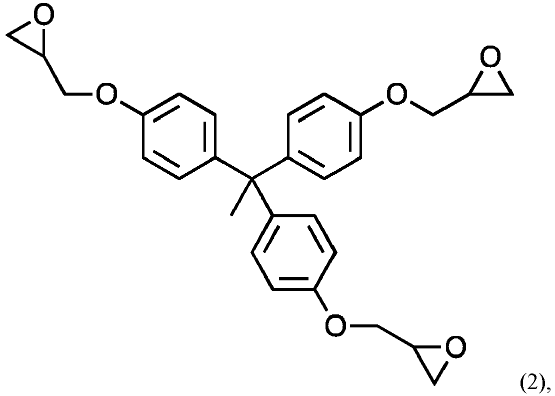 zur Erhöhung der Schmelzevolumenfließrate, bestimmt nach ISO 1133-1:2011-12 bei 300°C und 1,2 kg Belastung, einer Polycarbonatzusammensetzung, enthaltend die Komponente A, gegebenenfalls Komponente C und gegebenenfalls Komponente D. Die im Zusammenhang mit der erfindungsgemäßen Polycarbonatzusammensetzung erwähnten Vorzugsbereiche für die Komponenten A bis C und die gegebenenfalls vorhandene Komponente D gelten ebenso für die erfindungsgemäße Verwendung.

### Beispiele

Die im Folgenden beschriebenen Polycarbonatzusammensetzungen wurden auf einem Extruder ZE 25 der Fa. Berstorff mit einem Durchsatz von 5 kg/Std. und einer Schneckenrotationsfrequenz von 50/min durch Compoundierung hergestellt. Die Formkörper wurden auf einer Arburg Allrounder Spritzgießmaschine Typ 370 C, bei 280°C hergestellt.

Komponente A-1: Thermostabilisiertes lineares Polycarbonat auf Basis von Bisphenol A mit einer Schmelze-Volumenfließrate MVR von 12,5 cm³/10 min (gemäß ISO 1133-1:2011-12, bei einer Prüftemperatur 300°C und 1,2 kg Belastung). Komponente A-1 enthält 0,025 Gew.-% Triphenylphosphin (Komponente C) als Thermostabilisator.

Komponente A-2: Lineares Polycarbonat in Pulverform auf Basis von Bisphenol A mit einer Schmelze-Volumenfließrate MVR von 6 cm³/10 min (gemäß ISO 1133-1:2011-12, bei einer Prüftemperatur von 300°C und 1,2 kg Belastung).

Komponente B: Trisglycidylether von 1,1,1-Tris-(p-hydroxyphenyl)ethan der Firma Fa. Excel Industries Ltd., Indien.

Die Schlagzähigkeit wurde nach ISO 180/1C:2000-12 an Prüfstäben der Dimension 80 mm x 10 mm x 4 mm bei Raumtemperatur gemessen.

Die Glastemperatur wurde mittels DSC bestimmt (2. Aufheizen).

Die Bestimmung des Schmelze-Volumenfließrate (MVR) erfolgte nach ISO 1133-1:2011-12 (bei einer Prüftemperatur von 300 °C, Masse 1,2 kg) mit dem Gerät Zwick 4106 der Firma Zwick Roell.

Die Bestimmung der Schmelzeviskositäten erfolgte nach ISO 11443:2014-04 (Kegelplatteanordnung).

### 2. Zusammensetzungen

### Tabelle 1a: Erfindungsgemäße Zusammensetzungen 4 - 6, enthaltend Polyglycidylether, und Vergleichsbeispiele 1V - 3V

1V ist der eingesetzte thermostabilisierte Polycarbonatrohstoff.
2V ist das reextrudierte 1V; damit wird der Compoundierschritt für die erfindungsgemäßen Beispiele 4-6 simuliert.

**Tabelle 1a: Erfindungsgemäße Zusammensetzungen 4 - 6, enthaltend Polyglycidylether, und Vergleichsbeispiele 1V - 3V**

| **Rezeptur** | | **1V Granulat** | **2V Re-ex** | **3V** | **4** | **5** | **6** |
|---|---|---|---|---|---|---|---|
| Komponente A-1¹) | Gew.-% | 100 | 100 | 93 | 93 | 93 | 93 |
| Komponente A-2 | Gew.-% | | | 7 | 6,9 | 6,7 | 6,4 |
| Komponente B | Gew.-% | | | | 0,1 | 0,3 | 0,6 |

| | | | | | | | |
|---|---|---|---|---|---|---|---|
| ¹⁾: enthält Triphenylphosphin als Komponente C; | | | | | | | |

**Tabelle 1b: Glastemperaturen, rheologische Eigenschaften und Schlagzähigkeiten der erfindungsgemäßen Zusammensetzungen 4 - 6, enthaltend Polyglycidylether, und der Vergleichsbeispiele 1V - 3V**

| **Ergebnisse** | | **1V Granulat** | **2V Re-ex** | **3V** | **4** | **5** | **6** |
|---|---|---|---|---|---|---|---|
| T_{G} | °C | 148,1 | 145,1 | 147,8 | 147,8 | 147,1 | 145,0 |
| MVR 300°C/1,2 kg | cm³/10min | 12,1 | 12,1 | 11,6 | 13,6 | 16,0 | 16,6 |
| IMVR20' 300°C/1,2 kg | cm³/10min | 12,1 | 12,4 | 12,0 | 14,3 | 16,0 | 17,2 |

| **Delta MVR/IMVR20'** | | **0,0** | **-0,3** | **-0,4** | **-0,7** | **0,0** | **-0,6** |
|---|---|---|---|---|---|---|---|
| Schmelzevisk. bei 280°C | | | | | | | |
| eta 50 | Pa·s | 688 | 651 | 735 | 488 | 468 | |
| eta 100 | Pa·s | 668 | 633 | 672 | 461 | 457 | 456 |
| eta 200 | Pa·s | 619 | 596 | 630 | 446 | 438 | 441 |
| eta 500 | Pa·s | 515 | 499 | 521 | 374 | 383 | 384 |
| eta 1000 | Pa·s | 397 | 391 | 403 | 317 | 312 | 314 |
| eta 1500 | Pa·s | 325 | 321 | 330 | 267 | 264 | 265 |
| eta 5000 | Pa·s | 152 | 151 | 155 | 132 | 131 | 131 |
| Schmelzevisk. bei 300°C | | | | | | | |
| eta 50 | Pa·s | 373 | 375 | 404 | 279 | 238 | |
| eta 100 | Pa·s | 370 | 368 | 389 | 277 | 237 | |
| eta 200 | Pa·s | 356 | 353 | 369 | 274 | 236 | 244 |
| eta 500 | Pa·s | 314 | 312 | 322 | 246 | 217 | 226 |
| eta 1000 | Pa·s | 263 | 261 | 268 | 217 | 191 | 198 |
| eta 1500 | Pa·s | 226 | 225 | 235 | 192 | 171 | 176 |
| eta 5000 | Pa·s | 119 | 119 | 120 | 108 | 98 | 100 |
| Schmelzevisk. bei 320°C | | | | | | | |
| eta 100 | Pa·s | 203 | 198 | 202 | | 141 | |
| eta 200 | Pa·s | 202 | 195 | 199 | 154 | 139 | 138 |
| eta 500 | Pa·s | 190 | 184 | 185 | 149 | 137 | 133 |
| eta 1000 | Pa·s | 170 | 164 | 167 | 138 | 127 | 123 |
| eta 1500 | Pa·s | 154 | 149 | 152 | 127 | 118 | 114 |
| eta 5000 | Pa·s | 93 | 90 | 92 | 81 | 77 | 75 |
| Schmelzevisk. bei 340°C | | | | | | | |
| eta 200 | Pa·s | 123 | 103 | 108 | 89 | 83 | 76 |
| eta 500 | Pa·s | 119 | 101 | 106 | 87 | 82 | 75 |
| eta 1000 | Pa·s | 111 | 95 | 99 | 84 | 79 | 72 |
| eta 1500 | Pa·s | 104 | 88 | 92 | 80 | 75 | 69 |
| eta 5000 | Pa·s | 70 | 62 | 64 | 59 | 60 | 52 |
| Schlagzähigkeit ISO180/1C | kJ/m² | 7x n.g. 3x 243s | n.g. | n.g. | n.g. | n.g. | n.g. |

| | | | | | | | |
|---|---|---|---|---|---|---|---|
| n.g.: nicht gebrochen (kein Wert, da kein Bruch) | | | | | | | |

Aus der Tabelle ist zu erkennen, dass die Zusammensetzungen gemäß den Vergleichsbeispielen, welche keinen Polyglycidylether enthalten, eine deutlich schlechtere Schmelze-Volumenfließrate MVR aufweisen. Die Fließkurven der erfindungsgemäßen Zusammensetzungen zeigen bei verschiedenen Messtemperaturen über den gesamten Scherbereich jeweils deutlich reduzierte Schmelzeviskositäten, was eine verbesserte Fließfähigkeit bedeutet. Dabei sind die Auswirkungen auf die Glasübergangstemperatur nicht signifikant. Die Schlagzähigkeit ist unverändert gut.

## Patentansprüche

1. Zusammensetzung, enthaltend
A) 64,0 - 99,94 Gew.-% aromatisches Polycarbonat und
B) 0,05 bis 3,0 Gew.-% mindestens einer Polyglycidyletherverbindung der Formel (1) 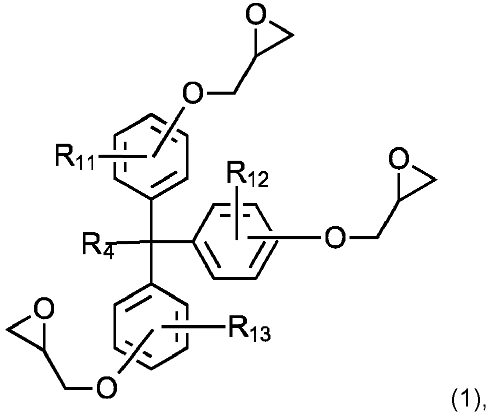 in der R₄ für eine C₁- bis Cs-Alkyl- oder für eine Arylgruppe steht, wobei die Alkylgruppe verzweigt oder unverzweigt ist, und
R₁₁ bis R₁₃ gleich oder verschieden sind und für H, C₁- bis Cs-Alkyl- oder Arylreste stehen, wobei die Alkylreste verzweigt oder unverzweigt sind.

2. Zusammensetzung nach Anspruch 1, **dadurch gekennzeichnet, dass** die Menge der Polyglycidyletherverbindung 0,1 bis 0,6 Gew.-% beträgt.

3. Zusammensetzung nach einem der vorhergehenden Ansprüche, **dadurch gekennzeichnet, dass** als Polyglycidyletherverbindung der Formel (1), alleine oder im Gemisch mit anderen Polyglycidylethern der Formel (1), der Trisglycidylether von 1,1,1-Tris-(p-hydroxyphenyl)ethan der Formel (2) 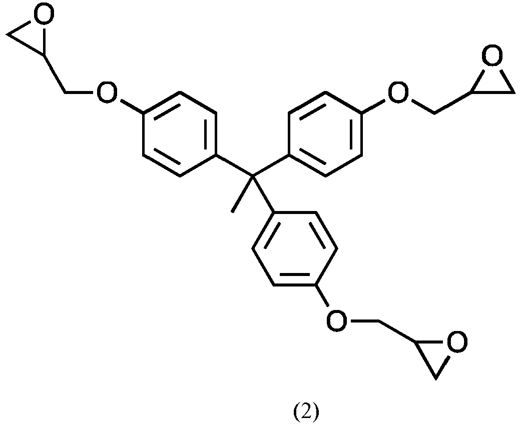 enthalten ist.

4. Zusammensetzung nach einem der vorhergehenden Ansprüche ferner enthaltend 0,001 Gew.% bis 3 Gew.-% mindestens eines Additivs aus der Gruppe der Thermostabilisatoren, UV-Stabilisatoren und/oder Entformungsmittel (Komponente C).

5. Zusammensetzung nach einem der vorhergehenden Ansprüche, bestehend aus den folgenden Komponenten
A) 64,0 - 99,94 Gew.-% aromatischem Polycarbonat,
B) 0,05 bis 3,0 Gew.-% Polyglycidylether der Formel (1),
C) 0,001 Gew.-% bis 3 Gew.-% mindestens eines Additivs ausgewählt aus den Gruppen der Thermostabilisatoren, UV-Stabilisatoren und Entformungsmittel, und
D) 0,0 Gew.% bis 30,0 Gew.-% eines oder mehrerer weiterer Additive ausgewählt aus den Gruppen der Flammschutzmittel, IR-Absorber, Antistatika und anorganische Füllstoffe.

6. Formteil, hergestellt aus einer Zusammensetzung gemäß einem der Ansprüche 1 bis 5.

7. Formteil nach Anspruch 6, **dadurch gekennzeichnet, dass** das Formteil eine Dicke von 0,1 bis 3 mm aufweist

8. Formteil gemäß Anspruch 7, **dadurch gekennzeichnet, dass** das Formteil eine Dicke von 0,1 bis 2 mm aufweist.

9. Formteil gemäß Anspruch 8, **dadurch gekennzeichnet, dass** das Formteil eine Dicke von 0,1 bis 1,0 mm aufweist.

10. Verwendung von mindestens einer Polyglycidyletherverbindung der Formel (1) 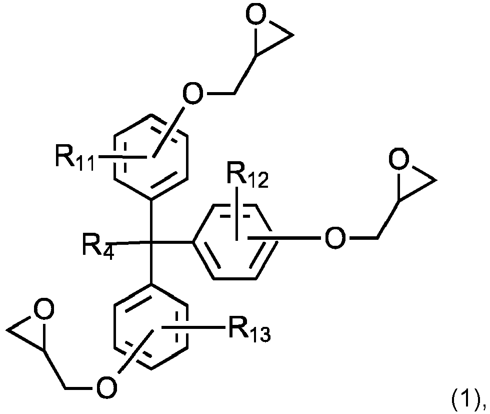 in der R₄ für eine C₁- bis Cs-Alkyl- oder für eine Arylgruppe steht, wobei die Alkylgruppe verzweigt oder unverzweigt ist, und
R₁₁ bis R₁₃ gleich oder verschieden sind und für H, C₁- bis Cs-Alkyl- oder Arylreste stehen, wobei die Alkylreste verzweigt oder unverzweigt sind,
zur Erhöhung der Schmelzevolumenfließrate, bestimmt nach ISO 1133-1:2011-12 bei 300°C und 1,2 kg Belastung, einer Polycarbonatzusammensetzung.

11. Verwendung gemäß Anspruch 10, wobei als Polyglycidyletherverbindung der Formel (1), alleine oder im Gemisch mit anderen Polyglycidylethern der Formel (1), der Trisglycidylether von 1,1,1-Tris-(p-hydroxyphenyl)ethan der Formel (2) 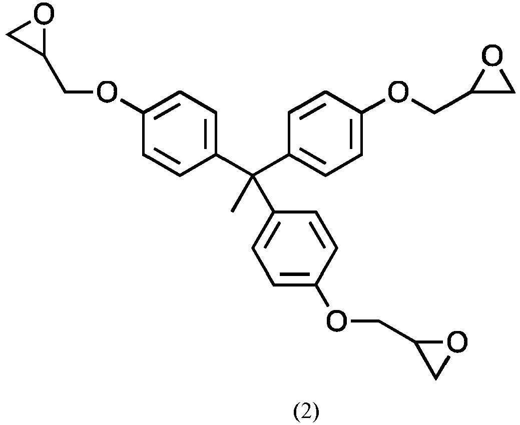 enthalten ist.
1. Zusammensetzung, enthaltend
A) 64,0 - 99,94 Gew.-% aromatisches Polycarbonat und
B) 0,05 bis 3,0 Gew.-% mindestens einer Polyglycidyletherverbindung der Formel (1) 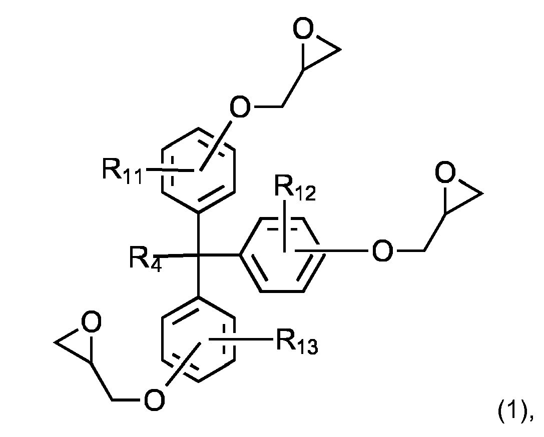 in der R₄ für eine C₁- bis C₈-Alkyl- oder für eine Arylgruppe steht, wobei die Alkylgruppe verzweigt oder unverzweigt ist, und
R₁₁ bis R₁₃ gleich oder verschieden sind und für H, C₁- bis C₈-Alkyl- oder Arylreste stehen, wobei die Alkylreste verzweigt oder unverzweigt sind.
2. Zusammensetzung nach Anspruch 1, **dadurch gekennzeichnet, dass** die Menge der Polyglycidyletherverbindung 0,1 bis 0,6 Gew.-% beträgt.
3. Zusammensetzung nach einem der vorhergehenden Ansprüche, **dadurch gekennzeichnet, dass** als Polyglycidyletherverbindung der Formel (1), alleine oder im Gemisch mit anderen Polyglycidylethern der Formel (1), der Trisglycidylether von 1,1,1-Tris-(p-hydroxyphenyl)ethan der Formel (2) 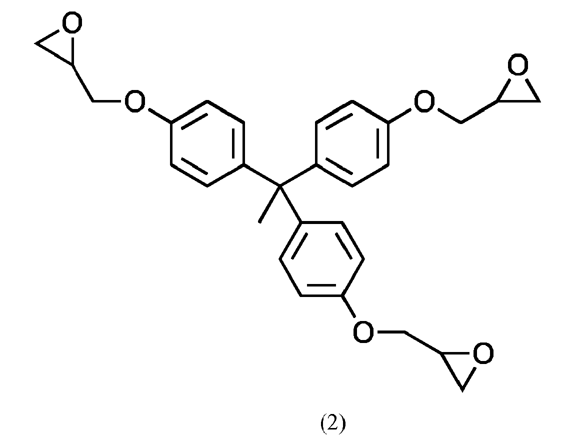 enthalten ist.
4. Zusammensetzung nach einem der vorhergehenden Ansprüche ferner enthaltend 0,001 Gew.% bis 3 Gew.-% mindestens eines Additivs aus der Gruppe der Thermostabilisatoren, UV-Stabilisatoren und/oder Entformungsmittel (Komponente C).
5. Zusammensetzung nach einem der vorhergehenden Ansprüche, bestehend aus den folgenden Komponenten
A) 64,0 - 99,94 Gew.-% aromatischem Polycarbonat,
B) 0,05 bis 3,0 Gew.-% Polyglycidylether der Formel (1),
C) 0,001 Gew.-% bis 3 Gew.-% mindestens eines Additivs ausgewählt aus den Gruppen der Thermostabilisatoren, UV-Stabilisatoren und Entformungsmittel, und
D) 0,0 Gew.% bis 30,0 Gew.-% eines oder mehrerer weiterer Additive ausgewählt aus den Gruppen der Flammschutzmittel, IR-Absorber, Antistatika und anorganische Füllstoffe.
6. Formteil, hergestellt aus einer Zusammensetzung gemäß einem der Ansprüche 1 bis 5.
7. Formteil nach Anspruch 6, **dadurch gekennzeichnet, dass** das Formteil eine Dicke von 0,1 bis 3 mm aufweist
8. Formteil gemäß Anspruch 7, **dadurch gekennzeichnet, dass** das Formteil eine Dicke von 0,1 bis 2 mm aufweist.
9. Formteil gemäß Anspruch 8, **dadurch gekennzeichnet, dass** das Formteil eine Dicke von 0,1 bis 1,0 mm aufweist.
10. Verwendung von mindestens einer Polyglycidyletherverbindung der Formel (1) 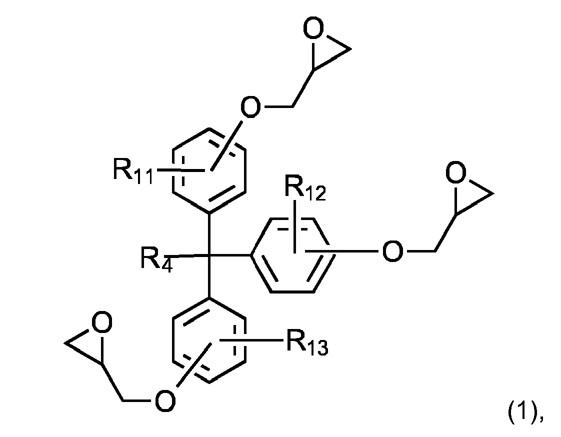 in der R₄ für eine C₁- bis C₈-Alkyl- oder für eine Arylgruppe steht, wobei die Alkylgruppe verzweigt oder unverzweigt ist, und
R₁₁ bis R₁₃ gleich oder verschieden sind und für H, C₁- bis C₈-Alkyl- oder Arylreste stehen, wobei die Alkylreste verzweigt oder unverzweigt sind,
zur Erhöhung der Schmelzevolumenfließrate, bestimmt nach ISO 1133-1:2011-12 bei 300°C und 1,2 kg Belastung, einer Polycarbonatzusammensetzung.
11. Verwendung gemäß Anspruch 10, wobei als Polyglycidyletherverbindung der Formel (1), alleine oder im Gemisch mit anderen Polyglycidylethern der Formel (1), der Trisglycidylether von 1,1,1-Tris-(p-hydroxyphenyl)ethan der Formel (2) 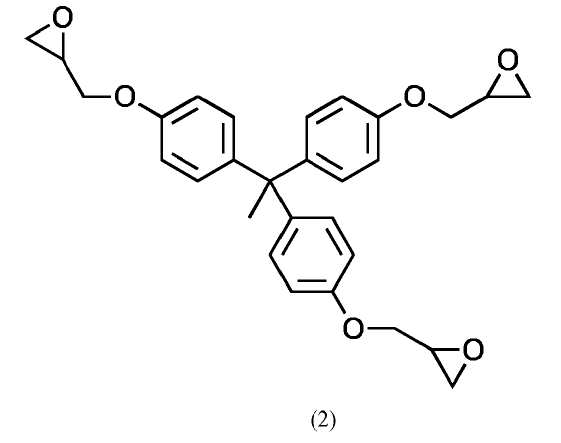 enthalten ist.

## Claims

1. Composition comprising
A) 64.0-99.94 wt% of aromatic polycarbonate and
B) 0.05 to 3.0 wt% of at least one polyglycidyl ether compound of the formula (1) 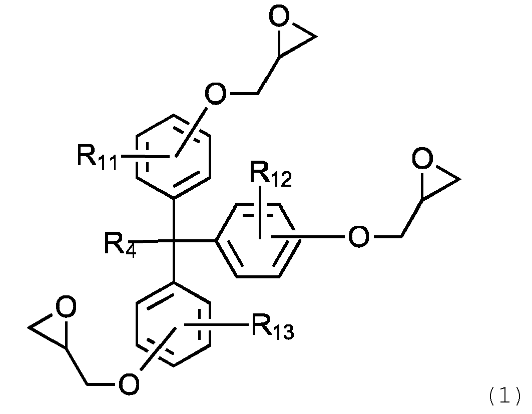 in which R₄ is a C₁- to C₈-alkyl group or an aryl group, where the alkyl group is branched or unbranched, and
R₁₁ to R₁₃ are the same or different and are H, C₁- to C₈-alkyl radicals or aryl radicals, where the alkyl radicals are branched or unbranched.

2. Composition according to Claim 1, **characterized in that** the amount of the polyglycidyl ether compound is 0.1 to 0.6 wt%.

3. Composition according to either of the preceding claims, **characterized in that** the polyglycidyl ether compound of the formula (1) present, alone or in a mixture with other polyglycidyl ethers of the formula (1), is the trisglycidyl ether of 1,1,1-tris(p-hydroxyphenyl)ethane of the formula (2)

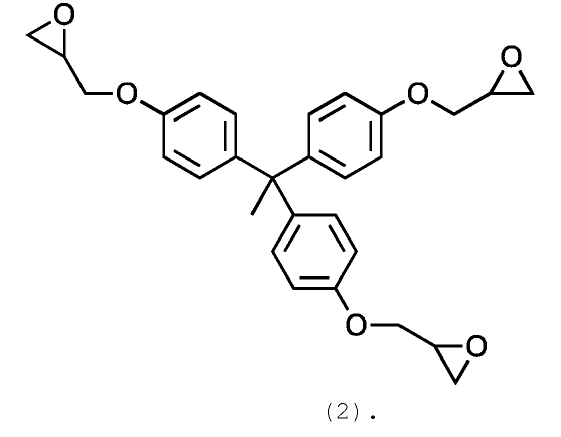

4. Composition according to any of the preceding claims, further comprising 0.001 wt% to 3 wt% of at least one additive from the group of the thermal stabilizers, UV stabilizers and/or demoulding agents (component C).

5. Composition according to any of the preceding claims, consisting of the following components:
A) 64.0-99.94 wt% of aromatic polycarbonate,
B) 0.05 to 3.0 wt% of polyglycidyl ether of the formula (1),
C) 0.001 wt% to 3 wt% of at least one additive selected from the groups of the thermal stabilizers, UV stabilizers and demoulding agents, and
D) 0.0 wt% to 30.0 wt% of one or more further additives selected from the groups of the flame retardants, IR absorbers, antistats and inorganic fillers.

6. Moulding produced from a composition according to any of Claims 1 to 5.

7. Moulding according to Claim 6, **characterized in that** the moulding has a thickness of 0.1 to 3 mm.

8. Moulding according to Claim 7, **characterized in that** the moulding has a thickness of 0.1 to 2 mm.

9. Moulding according to Claim 8, **characterized in that** the moulding has a thickness of 0.1 to 1.0 mm.

10. Use of at least one polyglycidyl ether compound of the formula (1) 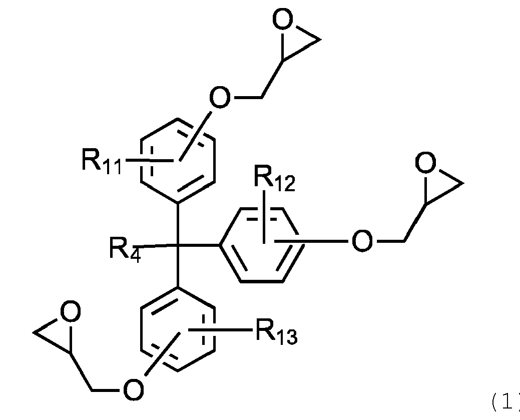 in which R₄ is a C₁- to C₈-alkyl group or an aryl group, where the alkyl group is branched or unbranched, and
R₁₁ to R₁₃ are the same or different and are H, C₁- to C₈-alkyl radicals or aryl radicals, where the alkyl radicals are branched or unbranched,
for increasing the melt volume flow rate, determined to ISO 1133-1:2011-12 at 300°C with a 1.2 kg load, of a polycarbonate composition.

11. Use according to Claim 10, wherein the polyglycidyl ether compound of the formula (1) present, alone or in a mixture with other polyglycidyl ethers of the formula (1), is the trisglycidyl ether of 1,1,1-tris(p-hydroxyphenyl)ethane of the formula (2)

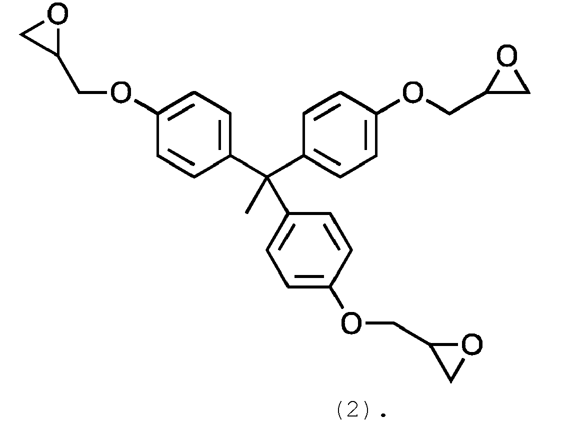

## Revendications

1. Composition, contenant
A) 64,0 à 99,94 % en poids d'un polycarbonate aromatique et
B) 0,05 à 3,0 % en poids d'au moins un composé éther polyglycidylique de Formule (1) 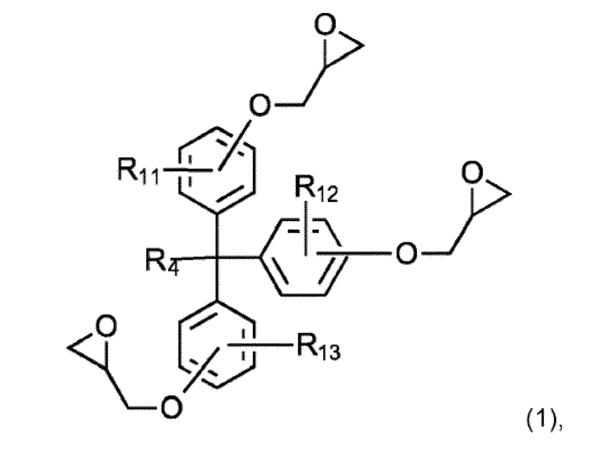 dans laquelle R₄ représente un groupe alkyle en C₁ à C₈ ou un groupe aryle, le groupe alkyle étant ramifié ou non ramifié, et
R₁₁ à R₁₃ sont identiques ou différents et représentent H, des radicaux alkyle en C₁ à C₈ ou aryle, les radicaux aryle étant ramifiés ou non ramifiés.

2. Composition selon la revendication 1, **caractérisée en ce que** la quantité du composé éther polyglycidylique est de 0,1 à 0,6 % en poids.

3. Composition selon l'une des revendications précédentes, **caractérisée en ce qu'**elle contient en tant que composé éther polyglycidylique de Formule (1), seul ou en mélange avec d'autres éthers polyglycidyliques de Formule (1), l'éther trisglycidylique du 1,1,1-tris-(p-hydroxyphényl)éthane de Formule (2)

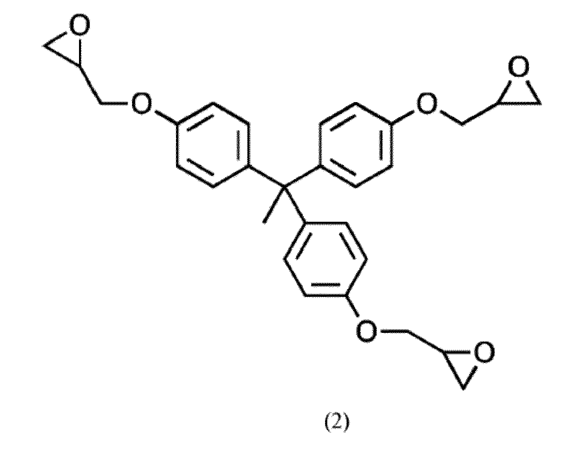

4. Composition selon l'une des revendications précédentes, contenant en outre 0, 001 % en poids à 3 % en poids d'au moins un additif du groupe des thermostabilisants, des stabilisants UV et/ou des agents de démoulage (composant C).

5. Composition selon l'une des revendications précédentes, constituée des composants suivants
A) 64,0 à 99,94 % en poids d'un polycarbonate aromatique,
B) 0,05 à 3,0 % en poids de l'éther polyglycidylique de Formule (1),
C) 0,001 % en poids à 3 % en poids d'au moins un additif choisi dans le groupe des thermostabilisants, des stabilisants UV et des agents de démoulage, et
D) 0,0 % en poids à 30,0 % en poids d'un ou plusieurs additifs supplémentaires choisis dans les groupes des agents d'ignifugation, des absorbants IR, des antistatiques et des charges inorganiques.

6. Pièce moulée, fabriquée à partir d'une composition selon l'une des revendications 1 à 5.

7. Pièce moulée selon la revendication 6, **caractérisée en ce que** la pièce moulée présente une épaisseur de 0,1 à 3 mm.

8. Pièce moulée selon la revendication 7, **caractérisée en ce que** la pièce moulée présente une épaisseur de 0,1 à 2 mm.

9. Pièce moulée selon la revendication 8, **caractérisée en ce que** la pièce moulée présente une épaisseur de 0,1 à 1,0 mm.

10. Utilisation d'au moins un composé éther polyglycidylique de Formule (1) 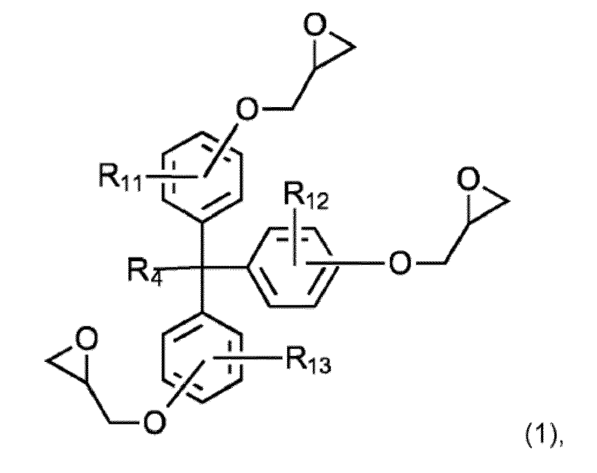 dans laquelle R₄ représente un groupe alkyle en C₁ à C₈ ou un groupe aryle, le groupe alkyle étant ramifié ou non ramifié, et
R₁₁ à R₁₃ sont identiques ou différents et représentent H, un radical alkyle en C₁ à C₈ ou aryle, les radicaux alkyle étant ramifiés ou non ramifiés,
pour augmenter l'indice de fluidité en volume, déterminé selon ISO 1133-1:2011-12 à 300 °C sous une charge de 1,2 kg, d'une composition de polycarbonate.

11. Utilisation selon la revendication 10, le composé éther polyglycidylique de Formule (1) étant, seul ou en mélange avec d'autres éthers polyglycidyliques de Formule (1), l'éther trisglycidylique du 1,1,1-tris-(p-hydroxyphényl)éthane de Formule (2)
